# EUROPEAN PATENT APPLICATION

(11) **EP 1 655 649 A2**
(43) Date of publication of application: **10.05.2006**
(21) Application number: 05024020.9
(22) Date of filing: 03.11.2005
(51) Int. Cl.: G06F 1/00

(54) **Device and method for digital rights management in a mobile terminal**

(30) Priority: 03.11.2004 KR 2004089055
(71) Applicant: Samsung Electronics Co., Ltd., Suwon-si, Gyeonggi-Do (KR)
(72) Inventor: Ahn, Won-Ick, Suwon-si Gyeonggi-do (KR)
(74) Representative: Grünecker, Kinkeldey, Stockmair & Schwanhäusser Anwaltssozietät

(57) **Abstract**

Disclosed is a device for digital rights management on a mobile terminal including a DRM message transmitter for selecting digital content to be sent to an intended recipient, generating a rights object for the selected digital content and sending the digital content with the generated rights object to the recipient; and a DRM message receiver for receiving digital content with a corresponding rights object and interpreting the rights object to use the digital content according to the interpreted rights object. Unlike content services offered by content providers which subscribers pay to receive and use, the digital rights management according to the present invention enables individual users of mobile terminals to copyright and protect their own digital multimedia content.

## Description

The present invention relates to a mobile communication terminal, and more particularly to a device and method for digital rights management on a mobile terminal.

As third generation mobile communication systems for high-speed data transmission have become more commonplace, so have mobile terminals capable of receiving and transmitting large amounts of multimedia data. Mobile users can create multimedia data such as ringtones, photographs, pictures, music files and moving images and send created multimedia files to any other user's mobile terminal so that the other user can share the multimedia files. Mobile service providers now offer multimedia services including digital content that subscribers pay to receive and use. Such services were initially based on copyright protection technologies such as DRM (Digital Rights Management) technologies which were developed for protecting the copyrights of various data and for providing more flexible and convenient access to copyright information on digital multimedia content.

DRM is a proven platform to protect copyrights of digital multimedia content. There are three methods of DRM: forward-lock, combined delivery and separate delivery. Forward-lock allows only the user who has received multimedia content to use the data, preventing the content from being modified or forwarded. In forward-lock method, no authentication key is used for multimedia content protection. Combined delivery is a method for generating and delivering a DRM message that combines multimedia content with an authentication key defining permissions and constraints for the use of the content. The use of the received DRM message is restricted according to the rights definition included in the DRM message. In separate delivery method, multimedia content and its corresponding authentication key are delivered via separate channels. In order to use multimedia content received from a service provider, the user has to receive a corresponding authentication key through a separate secure channel. The content is encrypted into DRM Content Format (DCF). The authentication key delivered as a separate message is a Content Encryption Key (CEK) or a Rights Object (RO).

The above DRM methods deliver content and a rights object to the user's terminal via WAP download or WAP push. These methods, however, can protect only the copyrights on multimedia content created by service providers. There exists no way to protect copyrights on multimedia content transmitted between users.

Accordingly, the present invention has been made to solve the above-mentioned problems occurring in the prior art.

It is the object of the present invention to provide a device and method for digital rights management which can protect copyrights on multimedia content transmitted between mobile terminals.

This object is solved by the subject matter of the independent claims.

Preferred embodiments are defined in the dependent claims.

An aspect of the present invention is to provide a device and method for digital rights management on a mobile terminal which gives a user's digital content a rights object and forwards the content with the rights object, thereby controlling a recipient's use of the content according to the rights object.

In accordance with one aspect of the present invention for accomplishing the above, there is provided a device for digital rights management on a mobile terminal, including a message transmitter for selecting digital content to be sent to an intended recipient, generating a rights object for the selected digital content and sending the digital content with the generated rights object to the recipient, and a message receiver for receiving digital content with a corresponding rights object and interpreting the rights object to use the digital content according to the interpreted rights object.

In accordance with another aspect of the present invention, there is provided a method for digital rights management on mobile terminals, including selecting by a sender, digital content to be sent, generating a rights object for the selected digital content and sending the digital content with the generated rights object, and receiving, by a receiver, the digital content with the rights object and interpreting the rights object to use the digital content according to the interpreted rights object.

The present invention will be more apparent from the following detailed description taken in conjunction with the accompanying drawings, in which:
FIG. 1 is a view illustrating the structure of a system for transmitting and receiving digital content between mobile terminals according to the present invention;
FIG 2 is a block diagram of a DRM message transmitter of a digital rights management device according to the present invention;
FIG 3 is a flow chart showing a process of sending a DRM message using a digital rights management device according to the present invention;
FIG. 4 is a view illustrating the structure of a DRM message according to a first embodiment of the present invention;
FIG. 5 is a view illustrating the structure of a DRM message according to a second embodiment of the present invention;
FIG 6 is a block diagram of a DRM message receiver of a digital rights management device according to the present invention; and
FIG. 7 is a flow chart showing a process of receiving a DRM message using a digital rights management device according to the present invention.

Hereinafter, preferred embodiments of the present invention will be described with reference to the accompanying drawings. In the following description of the present invention, a detailed description of known functions and configurations incorporated herein will be omitted when it may make the subject matter of the present invention unclear.

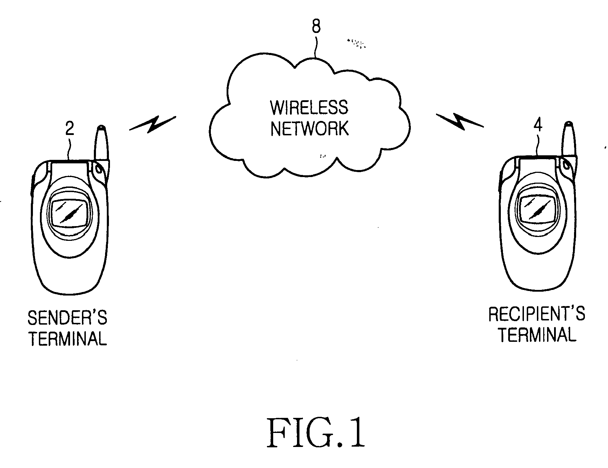

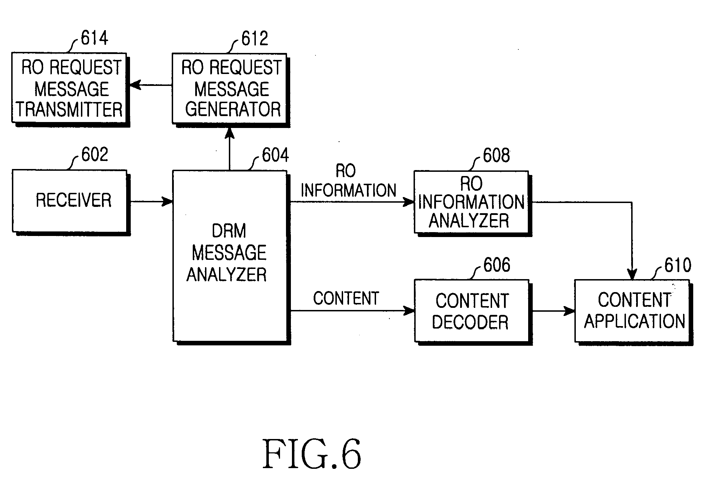

FIG. 1 illustrates the structure of a system for transmitting and receiving digital content between mobile terminals according to the present invention. Both a sender's terminal 2 and a recipient's terminal 4 include a digital rights management device according to the present invention. The digital rights management device includes a DRM message transmitter (not shown) and a DRM message receiver (shown in FIG. 6). The sender's terminal 2 can generate a rights object (RO) for the sender's digital content to be protected and send the digital content with the generated RO to the recipient's terminal 4 through a wireless network 8. Upon receiving digital content with an RO from the sender's terminal 2, the recipient's terminal 4 interprets the RO in order to use the digital content according to the interpreted RO. The RO may define permissions and constraints for the use of the content, such as a limited number of times the content can be used or transmitted and a specific time period. Even after sending the content to the recipient's terminal 4, the sender (i.e., the owner of the content) can restrict the recipient's use of the content using the RO for the content copyright protection.

Hereinafter, the structure and operation of a DRM message transmitter of a digital rights management device provided in a mobile terminal according to the present invention will be explained in detail.

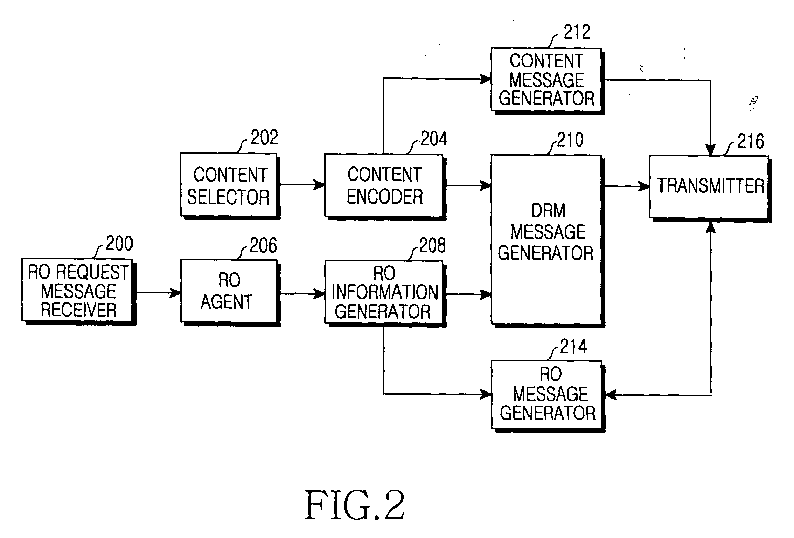

FIG. 2 is a block diagram of the DRM message transmitter. The DRM message transmitter includes a content selector 202, a content encoder 204, an RO agent 206, an RO information generator 208, a DRM message generator 210, a content message generator 212, an RO message generator 214, a transmitter 216 and an RO request message receiver 200.

The content selector 202 selects content to be sent to an intended recipient among the content stored in the mobile terminal according to the user's demand.

The content encoder 204 encodes the content selected by the content selector 202. In other words, the content encoder 204 encodes the content into a specific format such as DCF (DRM Content Format).

The RO agent 206 selects a DRM message sending method to send the content selected according to the user's demand. The RO agent 206 may select either combined delivery (i.e., a content and RO combined delivery) method for sending the content with an RO or separate delivery for sending the content and the RO separately (i.e., a content and RO combined delivery) method. When combined delivery is selected, a DRM message that combines the encoded content with RO information will be sent. When separate delivery is selected, a content message for the encoded content will be sent first, followed by an RO message for the RO information of the content.

The RO information generator 208 generates RO information of the content to be sent. The RO information may define permissions and constraints for the use of the content, such as a limited number of times the content can be used or transmitted and a specific time period in which the content can be used.

In the content and RO combined delivery method, the DRM message generator 210 combines the content encoded by the content encoder 204 with the RO information generated by the RO information generator 208 to form a DRM message.

In the content and RO separate delivery method, the content message generator 212 generates a content message for the encoded content, while the RO message generator 214 generates an RO message for the RO information of the content.

In the content and RO combined delivery method, the transmitter 216 transmits the DRM message to the intended recipient. In the content and RO separate delivery method, the transmitter 216 transmits the content message and the RO message separately.

In the separate delivery method, the RO request message receiver 200 receives an RO request message from the recipient for the content that has been previously sent to the recipient. The RO agent 206 generates RO information of the previously sent content in order to send a requested RO message.

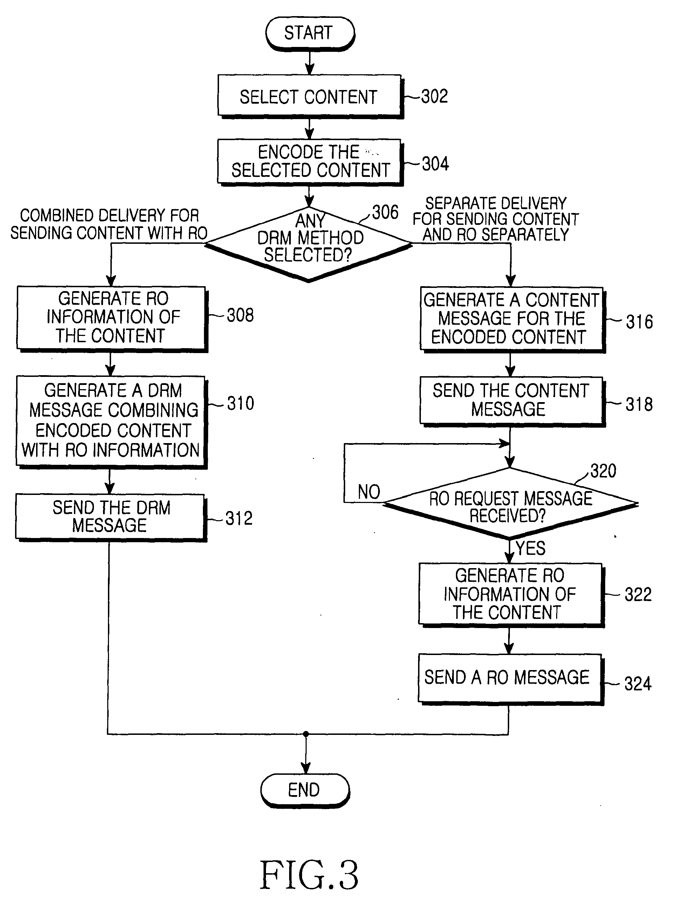

FIG. 3 is a flow chart showing a process of sending a DRM message using a digital rights management device according to the present invention. The DRM message transmitter selects digital content to be sent to the recipient's terminal 4 through the content selector 202 at step 302. After encoding the selected content into a specific format such as DCF (DRM Content Format) at step 304, the DRM message transmitter selects a DRM method to send the selected content at step 306. Specifically, the DRM message transmitter selects either combined delivery method for sending the content with the RO or separate delivery method for sending the content and the RO separately according to the user's demand.

When the content and RO combined delivery method is selected, the DRM message transmitter proceeds with step 308 to generate RO information of the content selected to be sent. The RO information may define permissions and constraints for the use of the content, such as a limited number of times the content can be used and/or transmitted and/or a specific time period in which the content can be used and/or transmitted. Upon generation of the RO information, the DRM message transmitter combines the encoded content with the RO information to generate a DRM message at step 310.

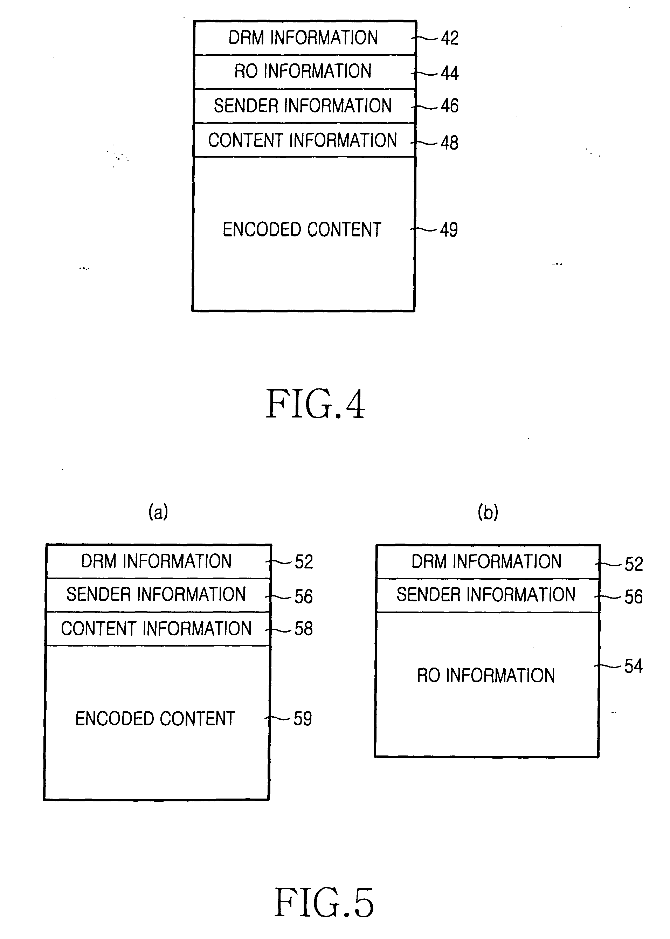

FIG. 4 shows a structure of a DRM message generated in the content and RO combined delivery method according to the first embodiment of the present invention. The DRM message includes DRM information 42, RO information 44, sender information 46, content information 48 and encoded content 49..

The DRM information 42 includes information about the selected content delivery method (which is, in this example, the content and RO combined delivery method). The RO information 44 includes a rights object that describes how the content can be used. The sender information 46 includes the serial identification number of the recipient's terminal 4 and the mobile phone number of the recipient. The content information 48 includes thumbnail or preview information and content type information indicating whether the content type is a photograph, a moving image an e-mail, a song, a musical tune, or a picture. The encoded content 49 refers to the content encoded into a specific format such as DCF. After generating a DRM message having the above structure, the DRM message transmitter proceeds with step 312 to send the DRM message to the recipient's terminal 4.

When the content and RO separate delivery method is selected, the DRM message transmitter generates a content message for the encoded content at step 316 and sends the content message to the recipient's terminal 4 at step 318. When receiving the content message, the recipient's terminal 4 may request RO information to use the received content. At step 320, the DRM message transmitter confirms whether an RO request message has been received from the recipient's terminal 4. Upon receiving an RO request message from the recipient's terminal 4, the DRM message transmitter proceeds with step 322 to generate RO information of the previously sent content. The DRM message transmitter then generates an RO message for the RO information and sends the RO message to the recipient's terminal 4 at step 324.

FIG. 5 illustrates an example structure of a DRM message generated in the content and RO separate delivery method according to the second embodiment of the present invention. In the separate delivery method, a content message and an RO message are separately formed. FIGs. 5A and 5B illustrate the structures of a content message and an RO message, respectively.

As shown in FIG. 5A, the content message includes DRM information 52, sender information 56, content information 58 and encoded content 59.

The DRM information 52 includes information about the selected content delivery method (which is, in this example, content and RO separate delivery method). The sender information 56 includes the serial identification number of the recipient's terminal 4 and the mobile phone number of the recipient. The content information 58 includes thumbnail or preview information showing whether the content is a photograph, moving image or e-mail. The encoded content 59 refers to the content encoded into a specific format such as DCF.

As shown in FIG. 5B, the RO message includes DRM information 52, sender information 56 and RO information 54. The DRM information 52 and sender information 56 included in the RO message are identical to those included in the content message. The RO information 54 includes a rights object that defines permissions and constraints for the use of the content, such as a limited number of times the content can be used and/or transmitted and/or a specific time period in which the content can be used and/or transmitted.

Hereinafter, the structure and operation of a DRM message receiver of a digital rights management device provided in a mobile terminal according to the present invention will be explained in detail. A block diagram of the DRM message receiver is shown in Fig 6. The DRM message receiver includes a receiver 602, a DRM message analyzer 604, a content decoder 606, an RO information analyzer 608, a content application 610, an RO request message generator 612 and an RO request message transmitter 614.

The receiver 602 receives a DRM message that combines content with an RO or separately receives a content message and an RO.

The DRM message analyzer 604 analyzes the received DRM message or separately received content message and RO message. When a DRM message that combines content with an RO is received, the DRM message analyzer 604 analyzes the DRM message and outputs the content in the DRM message to the content decoder 606 and the RO information in the DRM message to the RO information analyzer 608. When a content message is received, the DRM message analyzer 604 outputs the received content message to the content decoder 606 and instructs the RO request message generator 612 to generate an RO request message. When an RO message is subsequently received, the DRM message analyzer 604 analyzes the RO message and outputs the received RO information to the RO information analyzer 608.

The content decoder 606 decodes the content encoded into a specific format and outputs the decoded content. The RO information analyzer 608 analyzes the RO information and confirms the rights object for the use of the content. In other words, the RO information analyzer 608 confirms the rights object that defines a limited number of times the content can be used or transmitted and/or a specific time period in which the content can be used and/or transmitted.

The content application 610 receives the content decoded by the content decoder 606 and allows the recipient to use the content according to the RO information analyzed by the RO information analyzer 608.

The RO request message generator 612 generates an RO request message when RO information is needed to use the previously received content. The RO request message transmitter 614 sends the RO request message to the sender's terminal 2. In response to the RO request message, the sender's terminal 2 generates RO information of the content and sends the RO information to the recipient's terminal 4. Upon receiving the RO information, the DRM message receiver confirms the rights object concerning the previously received content and allows the recipient to use the content according to the RO information.

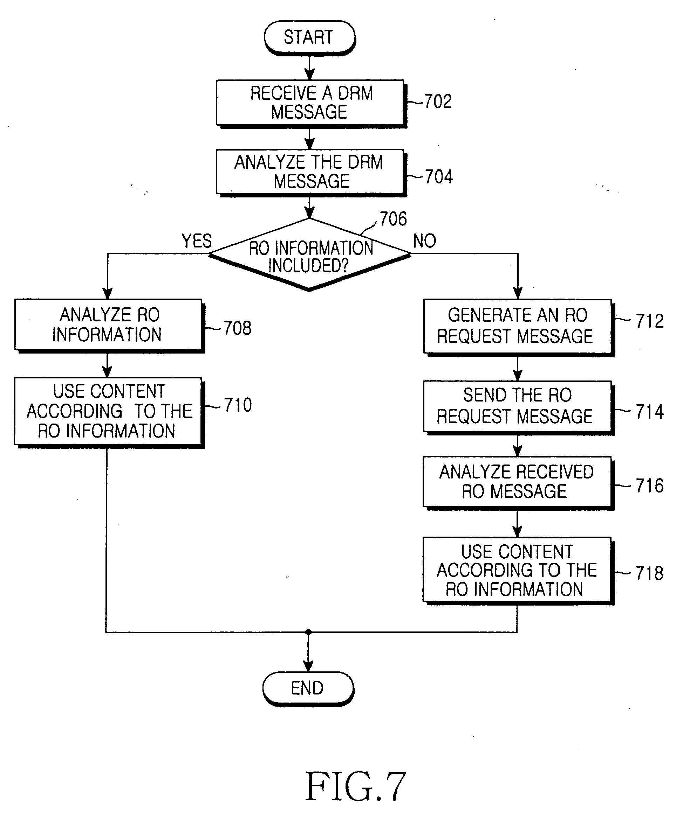

FIG. 7 is a flow chart showing a process of receiving a DRM message using a digital rights management device according to the present invention. The DRM message receiver receives a DRM message from the sender's terminal 2 at step 702. The DRM message can be either a message combining content with an RO or a message including a content message and a separately sent RO which are transmitted from the sender's terminal 2. The DRM message receiver analyzes the received DRM message. When a DRM message that combines content with an RO is received, the DRM message analyzer 604 analyzes the DRM message and separates content and an RO from the message. When a content message and an RO message are separately received, the DRM message analyzer 604 analyzes the content message and the RO message separately.

Based on the results of analysis, the DRM message receiver determines whether RO information is included in the received DRM message at step 706. If RO information is included in the DRM message, the DRM message receiver will analyze the RO information at step 708 to interpret the rights object for the use of the content. In other words, the DRM message receiver will confirm the number of times the content can be used and/or transmitted and/or the time period during which the content can be used or transmitted. The DRM message receiver will then allow the recipient to use the content according to the RO information (i.e., the rights object) at step 710.

When no RO information is included in the received DRM message, the DRM message receiver generates an RO request message at step 712 and sends the generated RO request message to the sender's terminal 2 at step 714. In response to the RO request message, the sender's terminal 2 sends an RO message for the requested RO information to the recipient's terminal 4. The DRM message receiver of the recipient's terminal 4 receives the RO message from the sender's terminal 2 and analyzes the RO message at step 716. Through the analysis of the RO information, the DRM message receiver recognizes the rights object for the use of the previously received content. In other words, the DRM message receiver confirms the number of times the content can be used or transmitted and the time period during which the content can be used. At step 718, the DRM message receiver allows the recipient to use the content according to the RO information (i.e., the rights object) at step 718.

As explained above, even after sending digital content to the recipient's terminal 4, the sender (i.e., the owner of the content) can restrict the recipient's use of the content using the RO for the content copyright protection.

Unlike paying content services offered by content providers, the digital rights management according to the present invention enables individual users of mobile terminals to copyright and protect their own digital multimedia content.

In accordance with the present invention, the individual users can deliver their own content with a rights object and thereby restrict the recipient's use of the content according to the rights object for the content protection.

Since the present invention ensures copyright protection in content transmission between individuals, rather than in content services offered by content providers, it will further activate the use of messenger applications.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. A device for digital rights management on a mobile terminal, comprising:
a DRM message transmitter for selecting digital content to be sent to an intended recipient, generating a rights object, RO, for the selected digital content and sending the digital content with the generated RO to the recipient; and
a DRM message receiver for receiving digital content with a corresponding RO and interpreting the RO to use the digital content, and using the digital content according to the interpreted RO.

2. The device as claimed in claim 1, wherein said DRM message transmitter includes:
a content selector for selecting digital content to be sent to an intended recipient among digital content stored in the mobile terminal;
a content encoder for encoding the selected digital content into a predetermined content format;
an RO information generator for generating RO information of the selected digital content;
an DRM message generator for generating a DRM message using the encoded digital content and the generated RO information; and
a transmitter for sending the DRM message to the recipient.

3. The device as claimed in claim 2, further including an RO agent for separately generating and sending a content message and an RO message when a content and RO separate delivery method is selected, or for generating and sending a DRM message combining the digital content with the RO information when content and RO combined delivery method is selected.

4. The device as claimed in claim 3, further including an RO request message receiver for receiving an RO request message from the recipient when using the content and RO separate delivery method.

5. The device as claimed in one of claims 1 to 4, wherein the DRM message receiver includes:
a receiver for receiving the digital content and the corresponding RO;
an RO analyzer for analyzing and interpreting the corresponding RO; and
a content application for using the received digital content according to the interpreted RO.

6. The device as claimed in claim 5, further including a DRM message analyzer for analyzing a DRM message to separately output the digital content and RO included in the DRM message, or for analyzing the digital content and the corresponding RO received as separate messages.

7. The device as claimed in one of claims 2 to 6, wherein the RO information includes a definition of permissions and constraints for the use of the digital content.

8. The device as claimed in claim 7, wherein the definition of permissions and constraints includes a limited number of times the content can be used or transmitted or a specific time period in which the content can be used or transmitted.

9. A method for digital rights management on mobile terminals, the method comprising the steps of:
selecting, by a sender, digital content to be sent using a desired method, generating a rights object, RO, for the selected digital content and sending the digital content with the generated RO; and
receiving, by a recipient, the digital content with the RO and interpreting RO object to use the digital content according to the interpreted RO.

10. The method as claimed in claim 9, wherein said step of sending the digital content with the RO includes:
selecting the digital content to be sent to a recipient's terminal;
encoding the selected digital content into a predetermined content format;
generating RO information of the selected digital content;
generating a DRM message using the encoded digital content and the generated RO information; and
sending the DRM message to the recipient's terminal.

11. The method as claimed in claim 10, wherein said step of generating the DRM message includes:
determining whether a content and RO separate delivery method or a combined delivery method is selected to send the digital content;
separately generating a content message and an RO message, when the content and RO separate delivery is selected; and
generating a DRM message combining the digital content with the RO information, when the content and RO combined delivery is selected.

12. The method as claimed in one of claims 9 to 11, wherein said step of receiving, by a recipient, the digital content with the rights object and using the digital content according to the rights object includes:
receiving the digital content and the RO and interpreting the RO; and
using the digital content according to the interpreted RO.

13. The method as claimed in one of claims 10 to 12, wherein the generated RO information includes a definition of permissions and constraints for the use of the digital content.

14. The method as claimed in claim 13, wherein the definition includes a limited number of times the content can be used or transmitted and a specific time period.
